# EUROPÄISCHE PATENTANMELDUNG

(11) **EP 4 218 394 A1**
(43) Veröffentlichungstag der Anmeldung: **02.08.2023**
(21) Anmeldenummer: 22207246.4
(22) Anmeldetag: 14.11.2022
(51) Int. Cl.: A01D 43/08

(54) **SELBSTFAHRENDER FELDHÄCKSLER SOWIE VERFAHREN ZUM BETREIBEN EINES SELBSTFAHRENDEN FELDHÄCKSLERS**

(30) Priorität: 27.01.2022 DE 102022101895
(71) Anmelder: CLAAS Selbstfahrende Erntemaschinen GmbH, 33428 Harsewinkel (DE)
(72) Erfinder: Heitmann, Christoph, 48231 Warendorf (DE); Wehner, Gregor, 88356 Ostrach Unterweiler (DE); Bönig Dr., Ingo, 33330 Gütersloh (DE); Harsch, Sebastian, 88348 Bad Saulgau (DE); Brune, Markus, 33428 Harsewinkel (DE); Neitemeier, Dennis, 59510 Lippetal (DE); Klein-Helmkamp, Marwin, 49565 Bramsche (DE)
(74) Vertreter: CLAAS Gruppe

(57) **Zusammenfassung**

Die vorliegende Erfindung betrifft einen selbstfahrenden Feldhäcksler (1), umfassend eine Messerschleif- und Gegenschneideneinstellvorrichtung (43) sowie zumindest eine Überwachungsvorrichtung (27), die dazu eingerichtet ist, zyklisch Daten zu generieren, die Informationen über den Verschleißzustand der Häckselmesser (8) und/oder den Abstand (36) der Gegenschneide (11) zur Schneidkante (29) enthalten, wobei der Feldhäcksler (1) eine Steuereinheit (21) umfasst, welche dazu eingerichtet ist, die von der Überwachungsvorrichtung (27) bereitgestellten Informationen über den Verschleißzustand der Häckselmesser (8) und den Abstand (36) auszuwerten, mit einem Grenzwert für den Verschleißzustand und/oder den Abstand (36) zu vergleichen, wobei der Grenzwert eine Untergrenze für einen durch die Messerschleif- und Gegenschneideneinstellvorrichtung (43) einzuhaltenden optimalen Bereich der momentanen Schneidschärfe der Häckselmesser (8) bzw. des Abstands (36) bildet, und bei einem Erreichen zumindest eines Grenzwertes automatisch eine Initialisierung eines Schleifvorganges und/oder einer Gegenschneidenverstellung durch die Messerschleif- und Gegenschneideneinstellvorrichtung (43) auszulösen, wobei die Durchführung des Schleifvorgangs und/oder der Gegenschneidenverstellung in den laufenden Arbeitsbetrieb des Feldhäckslers (1) integriert ist.

## Beschreibung

Die vorliegende Erfindung betrifft einen selbstfahrenden Feldhäcksler gemäß dem Oberbegriff des Anspruches 1. Weiterhin betrifft die vorliegende Erfindung ein Verfahren zum Betreiben eines selbstfahrenden Feldhäckslers gemäß dem Oberbegriff des Anspruches 13.

Aus der DE 10 2006 025 224 A1 ist ein selbstfahrender Feldhäcksler bekannt, der eine Messerschleifvorrichtung umfasst, die dazu eingerichtet ist, auf einer Häckseltrommel angeordnete Häckselmesser automatisch nachzuschleifen. Das Nachschleifen der Häckselmesser erfolgt im sogenannten Nichtarbeitsbetrieb des Feldhäckslers, womit Zwangsunterbrechungen des laufenden Ernteprozesses bezeichnet sind, welche bei der Fahrt durch das Vorgewende auftreten. Während der Fahrt im Vorgewende werden die Häckselmesser nachgeschliffen. Die DE 10 2006 025 224 A1 lässt dabei den Verschleißzustand der Häckselmesser ebenso unberücksichtigt wie den Abstand einer Gegenschneide zur Schneidkante der Häckselmesser. Gemäß der DE 10 2006 025 224 A1 wird das Nachschleifen unabhängig vom tatsächlichen Verschleißzustand durchgeführt, wodurch die Abnutzung infolge des Nachschleifens größer sein kann, als der tatsächliche Verschleiß bedingt durch das Häckseln von Erntegut. Eine erforderliche Anpassung des Abstands der Gegenschneide zur Schneidkante der Häckselmesser bliebt bei der DE 10 2006 025 224 A1 ebenso unberücksichtigt, wodurch die Häckselqualität als auch der Energieverbrauch wegen des erhöhten Leistungsbedarfs der Häckseleinrichtung des Feldhäckslers negativ beeinflusst werden.

Ausgehend vom vorstehend genannten Stand der Technik liegt der Erfindung die Aufgabe zugrunde, einen selbstfahrenden Feldhäcksler der eingangs genannten Art weiterzubilden, welcher die Nachteile des Standes der Technik vermeidet, insbesondere, dass einer Abnahme der Schneidschärfe entgegengewirkt wird, wobei der tatsächliche Verschleiß berücksichtigt wird.

Diese Aufgabe wird gelöst durch einen selbstfahrenden Feldhäcksler mit den Merkmalen des unabhängigen Patentanspruchs 1 sowie ein Verfahren zum Betreiben eines selbstfahrenden Feldhäckslers mit den Merkmalen des unabhängigen Patentanspruchs 13. Vorteilhafte Ausführungsformen und Weiterbildungen sind den hiervon abhängigen Ansprüchen zu entnehmen.

Gemäß dem Anspruch 1 wird ein selbstfahrender Feldhäcksler vorgeschlagen, welcher eine Messerschleif- und Gegenschneideneinstellvorrichtung umfasst, die dazu eingerichtet ist, auf einer Häckseltrommel angeordnete Häckselmesser nachzuschleifen sowie den Abstand einer der Häckseltrommel zugeordneten Gegenschneide zur Schneidkante der Häckselmesser einzustellen und zu adaptieren, sowie zumindest eine Überwachungsvorrichtung, die dazu eingerichtet ist, zyklisch Daten zu generieren, die Informationen über den Verschleißzustand der Häckselmesser und/oder den Abstand der Gegenschneide zur Schneidkante enthalten. Erfindungsgemäß ist vorgesehen, dass der Feldhäcksler eine Steuereinheit umfasst, welche dazu eingerichtet ist, die von der Überwachungsvorrichtung, insbesondere zyklisch, bereitgestellten Informationen über den Verschleißzustand der Häckselmesser und den Abstand der Gegenschneide zur Schneidkante der Häckselmesser auszuwerten, mit einem Grenzwert für den Verschleißzustand und/oder den Abstand zu vergleichen, wobei der Grenzwert eine Untergrenze für einen durch die Messerschleif- und Gegenschneideneinstellvorrichtung einzuhaltenden optimalen Bereich der momentanen Schneidschärfe der Häckselmesser bzw. des Abstands während des Ernteprozesses bildet, und bei einem Erreichen zumindest eines Grenzwertes automatisch eine Initialisierung eines Schleifvorganges und/oder einer Gegenschneidenverstellung durch die Messerschleif- und Gegenschneideneinstellvorrichtung auszulösen, wobei die Durchführung des Schleifvorgangs und/oder der Gegenschneidenverstellung in den laufenden Arbeitsbetrieb des Feldhäckslers integriert ist.

Der Erfindung liegt die Überlegung zugrunde, kleinsten Abnahmen der Schneidschärfe direkt entgegenzuwirken, damit die Schneidschärfe nahezu gleich bleibt. Getrieben wird diese Überlegung von dem Gedanken, den Kraftstoffverbrauch des Feldhäckslers auf einem möglichst niedrigen Niveau zu halten. Dies geht mit einer kontinuierlichen Überwachung der momentanen Schneidschärfe der Häckselmesser bzw. des Abstands der Gegenschneide und dem Reagieren auf Änderungen durch Nachschleifen und/oder Nachstellen bzw. Adaptieren des Abstands einher. Als optimaler Bereich der momentanen Schneidschärfe der Häckselmesser ist die Schneidschärfe anzusehen, die sich nach Durchführung von einem bis maximal drei Schleifzyklen während einer einzelnen Ernteprozessunterbrechung erreichen lässt. Das in den laufenden Arbeitsbetrieb des Feldhäckslers integrierte Adaptieren des Abstands der Gegenschneide kann dabei in Abhängigkeit oder unabhängig von der Durchführung zumindest eines Schleifzyklus erfolgen. Zusammenfassend lassen sich für das Schleifen und/oder Adaptieren des Abstands geringere Warte- bzw. Stillstandzeiten erreichen, indem die Schneidschärfe der Häckselmesser im Wesentlichen auf dem Niveau eines neuen Häckselmessers gehalten wird.

Bevorzugt kann die Messerschleif- und Gegenschneideneinstellvorrichtung zur Durchführung des Schleifvorgangs und/oder der Gegenschneidenverstellung während einer, insbesondere jeder, Fahrt im Vorgewende und/oder bei Durchführung eines, insbesondere jeden, Wechselvorgangs eines den Feldhäcksler während des laufenden Arbeitsbetriebes begleitenden Transport- oder Überladewagens eingerichtet sein. Somit werden sämtliche zur Verfügung stehenden Unterbrechungen des laufenden Arbeitsbetriebes genutzt, um die Schneidschärfe der Häckselmesser im Wesentlichen im Bereich von neuen Häckselmessern zu halten. Entsprechendes gilt für die Adaption des Abstands der Gegenschneide, für die sämtliche zur Verfügung stehenden Unterbrechungen des laufenden Arbeitsbetriebes genutzt werden können, um einen geringstmöglichen voreingestellten Abstand zur Schneidkante der Häckselmesser aufrechtzuerhalten, wodurch eine hohe Häckselqualität gewahrt bleibt. Durch diese Maßnahmen wird der durch den Häckselprozess bedingte Verschleiß an der Gegenschneide und den Häckselmessern verringert, was mit erhöhten Standzeiten der Gegenschneide und der Häckselmesser einhergeht. Das Aufrechterhalten der Schneidschärfe führt zu einem geringeren durchschnittlichen Leistungsbedarf und damit einer Kraftstoffverbrauchsminderung durch den Antriebsmotor.

Insbesondere kann die Steuereinheit dazu eingerichtet sein, das Erreichen und Verlassen eines Vorgewendes oder die Durchführung eines Wechselvorganges eines Transport- oder Überladewagens während des Ernteprozesses zu bestimmen. Dabei kann das Erreichen und Verlassen eines Vorgewendes beispielsweise durch die jeweilige Detektion des Aushebens und Absenkens des Vorsatzgerätes bestimmt werden. Ergänzend können ein Lenkeinschlag und/oder der Erntegutdurchsatz überwacht werden, um das Erreichen und Verlassen eines Vorgewendes zu bestimmen. Darüber hinaus kann der Feldhäcksler ein Vorgewende-Managementsystem umfassen, welches Daten über das Erreichen und Verlassen von Vorgewenden eines zu bearbeitenden Schlages und die damit verbundene Dauer von Vorgewendefahrten bereitstellt. Weiterhin kann die sensorbasierte Überwachung des Überladevorganges auf den Transport- oder Überladewagen verwendet werden, um einen Wechselvorgang zu erkennen. Entsprechend kann die Steuereinheit die Messerschleif- und Gegenschneideneinstellvorrichtung zur Durchführung zumindest eines Schleifzyklus und/oder der Gegenschneidenverstellung in Abhängigkeit von der Unterbrechungsdauer ansteuern. In allen vorstehend genannten Situationen kann die Steuereinheit dazu eingerichtet sein, der Bedienperson des Feldhäckslers einen Warnhinweis zu geben, falls ein Schleifzyklus und/oder das Adaptieren der Gegenschneide nicht abgeschlossen sind, bevor das Vorgewende verlassen wurde oder der Wechselvorgang abgeschlossen ist.

Gemäß einer Weiterbildung kann die Steuereinheit zur Eingabe und/oder Auswahl von Parametern der Messerschleif- und Gegenschneideneinstellvorrichtung eingerichtet sein, wobei die Parameter eine Anzahl von auszuführenden Schleifzyklen sowie eine Häufigkeit der Gegenschneidenverstellung sind. Die Eingabe und/oder Auswahl der Parameter kann bevorzugt mittels einer Eingabe-Ausgabevorrichtung in der Kabine des Feldhäckslers durchgeführt werden. Alternativ kann als Eingabe-Ausgabevorrichtung ein mobiles Datenverarbeitungsgerät wie ein Mobilfunktelefon oder ein Tablet zur Anwendung kommen, welche dafür drahtlos oder drahtgebunden mit der Steuereinheit kommunizieren können. Dabei kann die Steuereinheit dazu eingerichtet sein, Standardparameter vorzuschlagen, welche die Bedienperson mittels der Eingabe-Ausgabevorrichtung auswählen kann. Darüber hinaus kann die Steuereinheit dazu eingerichtet sein, aufgrund einer Eingabe durch die Bedienperson den oder die Standardparameter zu übersteuern.

Gemäß einer Weiterbildung kann die Steuereinheit dazu eingerichtet sein, in Abhängigkeit von einer einzugebenden oder auszuwählenden Fruchtart und/oder einer Strategieauswahl die Messerschleif- und Gegenschneideneinstellvorrichtung anzusteuern. Eine fruchtartabhängige Ansteuerung berücksichtigt die unterschiedlichen Einflüsse auf den Verschleiß der Häckselmesser und/oder den Abstand der Gegenschneide zur Schneidkante. Beispielsweise ist es bei der Ernte von Gras oder Ganzpflanzensilage sinnvoll, die Häckselmesser häufiger nachzuschleifen, da diese durch die Aufnahme von Steinen und Sand einem höheren Verschleiß unterworfen sind, als bei anderen Fruchtarten wie Mais. Im Fall der Ernte von Mais ist es hingegen sinnvoll, den Abstand der Gegenschneide zur Schneidkante der Häckselmesser im Verhältnis zum Nachschleifen häufiger zu adaptieren, da bei dieser Fruchtart der Selbstschärfeeffekt der Häckselmesser im Gegensatz zur Verarbeitung von Gras ein häufiges Nachschleifen nicht erforderlich macht. Vielfach ist ein reines Adaptieren des Abstands der Gegenschneide ausreichend, wodurch der erforderliche Zeitraum zur Durchführung der Maßnahme erheblich verringert ist.

Hingegen berücksichtigt eine strategiebasierende Ansteuerung der Messerschleif- und Gegenschneideneinstellvorrichtung Zielvorgaben wie das Aufrechterhalten einer Häckselqualität oder das Aufrechterhalten der Schneidschärfe. Beispielsweise kann eine Gegenschneideeinstellstrategie ausgewählt werden, welche für ein in Relation zur Anzahl der Schleifzyklen häufiges Einstellen der Gegenschneide sorgt. Hierbei ist die Anzahl der Einstellvorgänge unabhängig von der Anzahl der durchgeführten Schleifzyklen. Eine Schneidschärfestrategie kann eine häufigere Ausführung von Schleifzyklen vorsehen, um den Messerverschleiß zu kompensieren. Die Durchführung der Adaption der Gegenschneide erfolgt dabei in Abhängigkeit von einer vorgebbaren Anzahl von auszuführenden Schleifzyklen.

Insbesondere kann die Steuereinheit dazu eingerichtet sein, die Fahrtdauer einer Vorgewendefahrt zu bestimmen, um in Abhängigkeit von der bestimmten Fahrtdauer eine mögliche Anzahl von Schleifzyklen zu bestimmen.

Gemäß einer bevorzugten Weiterbildung kann die Überwachungsvorrichtung Sensoren zur Bestimmung des Abstands der Gegenschneide zur Schneidkante umfassen, wobei die Überwachungsvorrichtung Sensorsignale an die Steuereinheit zu ihrer Auswertung überträgt, wobei die Steuereinheit dazu eingerichtet ist, anhand der ausgewerteten Sensorsignale das Auftreten von Vibrationen zu bestimmen, welche das Adaptieren des Abstands der Gegenschneide zur Schneidkante zumindest beeinflussen. Das Auftreten von Vibrationen beeinflusst die Genauigkeit und Gleichmäßigkeit der Adaption des Abstands der Gegenschneide zur Schneidkante.

Hierbei kann die Steuereinheit dazu eingerichtet sein, in Abhängigkeit von einem Schwellwert für die auftretenden Vibrationen die Fahrgeschwindigkeit und/oder die Antriebsdrehzahl eines Antriebsmotors des Feldhäckslers während einer Vorgewendefahrt oder eines Wechselvorganges, insbesondere automatisch, zu reduzieren. Das automatische Reduzieren der Fahrgeschwindigkeit und/oder der Antriebsdrehzahl des Antriebsmotors ist vorteilhaft, da dadurch zeitnah reagiert werden kann, um das nur begrenzt zur Verfügung stehende Zeitfenster einer Vorgewendefahrt nutzen zu können. Denkbar ist auch eine manuelle Reduzierung der Fahrgeschwindigkeit und/oder der Antriebsdrehzahl durch die Bedienperson, nachdem ein entsprechender Warnhinweis durch die Steuereinheit ausgegeben wurde. Durch das Reduzieren der Fahrgeschwindigkeit und/oder der Antriebsdrehzahl lassen sich die Vibrationen zumindest reduzieren. Nach erfolgter Durchführung der Adaption des Abstands der Gegenschneide zur Schneidkante kann die Steuereinheit dazu eingerichtet sein, die reduzierte Fahrgeschwindigkeit und/oder Antriebsdrehzahl des Antriebsmotors automatisch wieder auf den ursprünglichen Wert einzustellen.

Eine bevorzugte Weiterbildung sieht vor, dass die Steuereinheit dazu eingerichtet sein kann, bei einem Unterbrechen des Einstellvorgangs der Gegenschneide aufgrund zu starker Vibrationen die Gegenschneide in eine zu den Häckselmessern signifikant beabstandete gesicherte Position zu überführen. Hierzu kann beispielsweise der einzustellende Abstand um einen Wert von 0,2 mm oder mehr erhöht werden.

Um zu vermeiden, dass der Häckseleinrichtung des Feldhäckslers während des Nachschleifens oder des Einstellens der Gegenschneide unbeabsichtigt Erntegut zugeführt wird, kann die Steuereinheit dazu eingerichtet sein, den Betrieb eines Vorsatzgerätes und/oder einer Einzugsvorrichtung des Feldhäckslers vor der Durchführung eines Schleifvorganges und/oder einer Gegenschneidenverstellung für die Dauer der Durchführung automatisch zu unterbrechen.

In einer einfachen Ausgestaltung kann die Durchführung des Schleifvorganges und/oder der Gegenschneidenverstellung durch eine Bedienperson des Feldhäckslers manuell zu bestätigen sein. Die Steuereinheit kann mittels der Eingabe-Ausgabevorrichtung einen Hinweis ausgeben, dass zumindest ein durch die Bedienperson vorgegebenes Kriterium, wie eine Zeitdauer zwischen der Durchführung von Schleifzyklen, eine erreichte Flächenleistung und/oder eine erreichte Durchsatzleistung, erfüllt ist oder sind. Daraufhin kann die Bedienperson die Durchführung des Schleifvorganges und/oder der Gegenschneidenverstellung durch eine Eingabe bestätigen, so dass die Durchführung des Schleifvorganges und/oder der Gegenschneidenverstellung bei der nächsten Ernteprozessunterbrechung automatisch erfolgt.

Gemäß einer Weiterbildung kann die Steuereinheit zur Eingabe und/oder Vorgabe der Anzahl von Schleifzyklen und Einstellvorgängen der Gegenschneide bezogen auf in einem Auftragsmanagementsystem hinterlegten Daten zur Ernteleistung und/oder Erntedauer eingerichtet sein. Gemäß dieser Ausführungsform steuert die Steuereinheit die Messerschleif- und Gegenschneideneinstellvorrichtung in der Weise an, dass die Anzahl von Schleifzyklen und Einstellvorgängen der Gegenschneide automatisch auf die Ernteleistung und/oder die Erntedauer aufgeteilt werden. Insbesondere erfolgt die Aufteilung zeit- und/oder flächen- und/oder tonnageabhängig.

Insbesondere kann die Steuereinheit dazu eingerichtet sein, die Durchführung des Schleifvorganges und/oder der Gegenschneidenverstellung automatisch in Abhängigkeit von Signalen einer Schneidschärfesensoranordnung der Überwachungsvorrichtung vorzunehmen. Bei dieser vollautomatisierten Ausgestaltung kann die Steuereinheit selbstständig die Anzahl und die Zeitpunkte bestimmen, zu welchen die in den laufenden Arbeitsbetrieb des Feldhäckslers integrierte Durchführung des Schleifvorgangs und/oder der Gegenschneidenverstellung erfolgt.

Die eingangs gestellte Aufgabe wird zudem durch ein Verfahren zum Betreiben eines selbstfahrenden Feldhäckslers mit den Merkmalen des nebengeordneten Anspruchs 13 gelöst.

Gemäß dem Anspruch 13 wird ein Verfahren zum Betreiben eines selbstfahrenden Feldhäckslers nach einem der vorangehenden Ansprüche vorgeschlagen, gekennzeichnet durch die Verfahrensschritte:
- Auswerten von Informationen über den Verschleißzustand der Häckselmesser und den Abstand der Gegenschneide zur Schneidkante,
- Vergleichen der ausgewerteten Informationen mit einem Grenzwert für den Verschleißzustand und/oder den Abstand, wobei der Grenzwert eine Untergrenze für einen durch die Messerschleif- und Gegenschneideneinstellvorrichtung einzuhaltenden optimalen Bereich der momentanen Schneidschärfe der Häckselmesser bzw. des Abstands während des Ernteprozesses bildet, und
- Auslösen einer Initialisierung eines Schleifvorganges und/oder einer Gegenschneidenverstellung durch die Messerschleif- und Gegenschneideneinstellvorrichtung bei einem Erreichen des Grenzwertes, wobei die Durchführung des Schleifvorgangs und/oder der Gegenschneidenverstellung in den laufenden Arbeitsbetrieb des Feldhäckslers integriert wird. Auf die Vorteile des erfindungsgemäßen Feldhäckslers darf verwiesen werden.

Hierbei kann die Durchführung des Schleifvorgangs und/oder der Gegenschneidenverstellung während einer, insbesondere jeder, Fahrt im Vorgewende und/oder bei einem, insbesondere jedem, Wechselvorgang eines den Feldhäcksler während des laufenden Arbeitsbetriebes begleitenden Transport- oder Überladewagens durch die Messerschleif- und Gegenschneideneinstellvorrichtung durchgeführt werden.

Insbesondere kann die Durchführung des Schleifvorgangs und/oder der Gegenschneidenverstellung manuell durch eine Bedienperson, in Abhängigkeit von in einem Auftragsmanagementsystem hinterlegten Daten zur Ernteleistung und/oder Erntedauer oder vollautomatisch in Abhängigkeit von Signalen einer Schneidschärfesensoranordnung der Überwachungsvorrichtung ausgelöst werden.

Die vorliegende Erfindung wird nachstehend anhand eines in den Zeichnungen dargestellten Ausführungsbeispieles näher erläutert.

Es zeigen:
- Fig. 1: eine schematische Darstellung eines selbstfahrenden Feldhäckslers;
- Fig. 2: schematisch eine Detailansicht einer Häckseleinrichtung des Feldhäckslers gemäß Fig. 1 mit einer Überwachungsvorrichtung;
- Fig. 3: schematisch eine Detailansicht einer Häckseltrommel der Häckselvorrichtung mit einer Vorrichtung zur Verstellung einer Gegenschneide; und
- Fig. 4: ein vereinfachtes Funktionsschema des Zusammenwirkens von Steuereinheit, Überwachungsvorrichtung und Messerschleif- und Gegenschneideneinstellvorrichtung des Feldhäckslers.

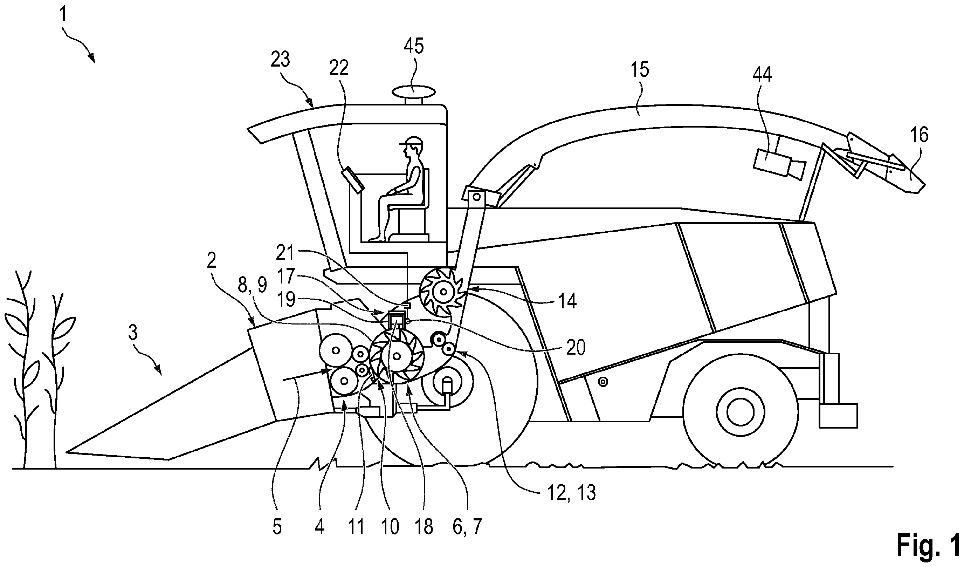

Fig. 1 zeigt eine schematische Darstellung eines selbstfahrenden Feldhäckslers 1 in Seitenansicht, der in seinem frontseitigen Bereich mittels eines Einzugskanals 2 einen Erntevorsatz 3 aufnimmt. Im rückwärtigen Bereich des Erntevorsatzes 3 sind diesem in dem Einzugskanal 2 paarweise angeordnete Einzugs- und Vorpresswalzen 4 zugeordnet, die einen aus dem Erntevorsatz 3 kommenden Erntegutstrom 5 annehmen, verdichten und in ihrem rückwärtigen Bereich an eine Häckseleinrichtung 6 übergeben. Die Häckseleinrichtung 6 umfasst eine Häckseltrommel 7, die mit Häckselmessern 8 bestückt ist. Die umlaufenden Häckselmesser 8 werden im Einzugsbereich 10 der Häckseltrommel 7 an einer sogenannten Gegenschneide 11, über die der zu zerkleinernde Erntegutstrom 5 gefördert wird, vorbeibewegt. Im rückwärtigen Bereich der Häckseltrommel 7 wird das zerkleinerte Erntegut sodann entweder an eine als sogenannter Cracker 12 ausgeführte Nachzerkleinerungseinrichtung 13 oder direkt an eine Nachbeschleunigungseinrichtung 14 übergeben. Während die Nachzerkleinerungseinrichtung 13 die körnigen Bestandteile des Erntegutstromes 5, beispielsweise Maiskörner, weiter zerkleinert, beschleunigt die Nachbeschleunigungseinrichtung 14 den Erntegutstrom 5 in einer Weise, dass dieser durch einen Auswurfkrümmer 15 bewegt und endseitig im Bereich einer Auswurfklappe 16 aus dem Feldhäcksler 2 austreten und an einen nicht dargestellten Transport- oder Überladewagen übergeben werden kann.

Um die Häckselmesser 8 der Häckseltrommel 7 schärfen zu können, ohne dabei den Ausbau der einzelnen Häckselmesser 8 bzw. den Ausbau der Häckseltrommel 7 insgesamt vornehmen zu müssen, ist oberhalb der Häckseltrommel 7 eine an sich bekannte Messerschleifeinrichtung 17 vorgesehen, die einen Schleifstein 18, eine diesem zugeordnete Schleifsteinhalterung 19 und eine Laufachse 20, auf der die Schleifvorrichtung 17 parallel zur Häckseltrommel 7 verschiebbar gelagert ist, sowie ein an sich bekannter und daher nicht dargestellter Antrieb zum Betreiben der Messerschleifeinrichtung 17 umfasst. Der Messerschleifeinrichtung 17 ist zu ihrer Regelung eine Steuereinheit 21 zugeordnet. Die Steuereinheit 21 ist mit einer Eingabe-Ausgabevorrichtung 22 in der Kabine 23 des Feldhäckslers 1 durch ein drahtloses oder drahtgebundenes Kommunikationsmittel verbunden.

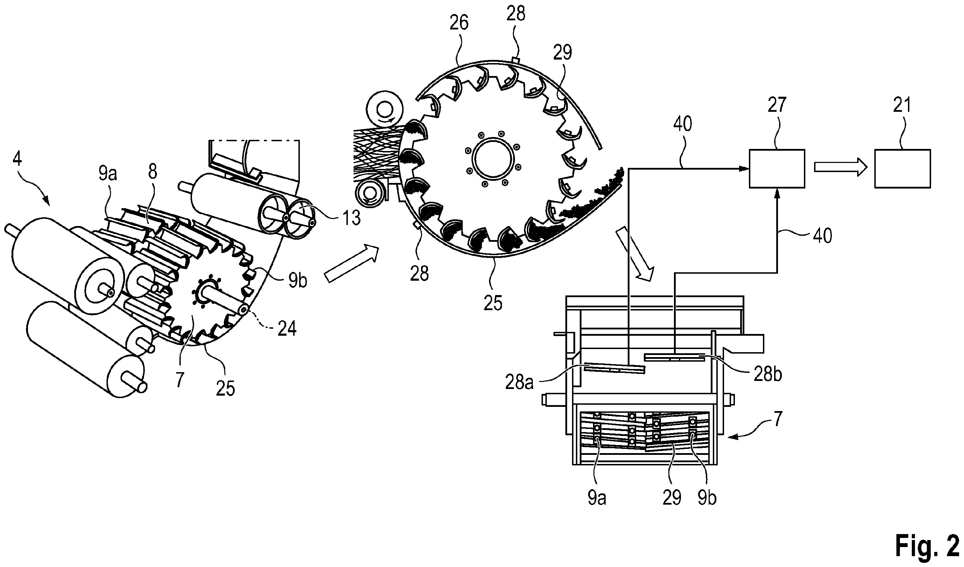

In Fig. 2 ist schematisch eine Detailansicht der Häckseleinrichtung 6 des Feldhäckslers 1 gemäß Fig. 1 mit einer Überwachungsvorrichtung 27 gezeigt. Die Häckseleinrichtung 6 umfasst rechts- und linksseitige Häckselmesseranordnungen 9a, 9b, wobei jede Häckselmesseranordnung 9a, 9b eine Vielzahl am Umfang der Häckseltrommel 7 schräg zur Drehachse 24 der Häckseltrommel 7 positionierter Häckselmesser 8 umfasst. Die Häckseltrommel 7 ist untenseitig von einem vorzugsweise aus Edelstahl bestehenden Trommelboden 25 abschnittsweise ummantelt. Obenseitig wird die Häckseltrommel 7 von einer vorzugsweise ebenfalls aus Edelstahl bestehenden Trommelrückwand 26 abschnittsweise umschlossen. Die Überwachungsvorrichtung 27 umfasst zumindest eine Schneidschärfesensoranordnung 28, welche gemäß dem in Fig. 2 dargestellten Ausführungsbeispiel entweder an der Trommelrückwand 26 und/oder am Trommelboden 25 positioniert sein kann. Es ist somit denkbar, dass zugleich sowohl am Trommelboden 25 als auch an der Trommelrückwand 26 eine Schneidschärfesensoranordnung 28 angeordnet ist. Die zumindest eine zumindest Schneidschärfesensoranordnung 28 umfasst zwei Sensorvorrichtungen 28a, 28b. Unabhängig von der konkreten Positionierung der zumindest einen Schneidschärfesensoranordnung 28 sind jeder Häckseltrommel 7 diese beiden Sensorvorrichtungen 28a, 28b in der Weise zugeordnet, dass jeweils eine der Sensorvorrichtungen 28a, 28b der jeweils zugehörigen Häckselmesseranordnung 9a, 9b zugeordnet ist, wobei jede Sensorvorrichtung 28a, 28b eine Schneidkante 29 des jeweiligen Häckselmessers 7 vollständig überdeckt, sodass jede Schneidkante 29 über ihre gesamte Länge hinweg durch die jeweilige Sensorvorrichtung 28a, 28b detektiert werden kann. Die jeweilige Sensorvorrichtung 28a, 28b ist entweder parallel zur Drehachse 24 der Häckseltrommel 7 oder parallel zur Schneidkante 29 der Häckselmesser 8 am Trommelboden 25 und/oder der Trommelrückwand 26 positioniert. Die rechte untere Darstellung in Fig. 2 zeigt nur beispielhaft die möglichen Ausrichtungen der Sensorvorrichtungen 28a, 28b in einer einzigen Darstellung.

Vorzugsweise werden alle Sensorvorrichtungen 28a, 28b entweder parallel zur Drehachse 24 der Häckseltrommel 7 oder parallel zur Schneidkante 29 der Häckselmesser 8 positioniert sein. Im dargestellten Ausführungsbeispiel sind die Sensorvorrichtungen 28a, 28b der Schneidschärfesensoranordnung 28 als Induktionssensoren ausgeführt, wobei jede der Sensorvorrichtungen 28a, 28b ein oder mehrere magnetische Erregeranordnungen sowie jeweils eine mit den magnetischen Erregeranordnungen zusammenwirkende Polanordnung umfasst. Hinsichtlich des Aufbaus und der Funktionsweise der als Induktionssensoren ausgeführten Sensorvorrichtungen 28a, 28b der Schneidschärfesensoranordnung 28 sowie der Auswertung der Sensorsignale durch die Steuereinheit 21 wird auf die Druckschrift DE 10 2019 112 973 A1 verwiesen, auf deren Offenbarungsgehalt hier vollumfänglich Bezug genommen wird.

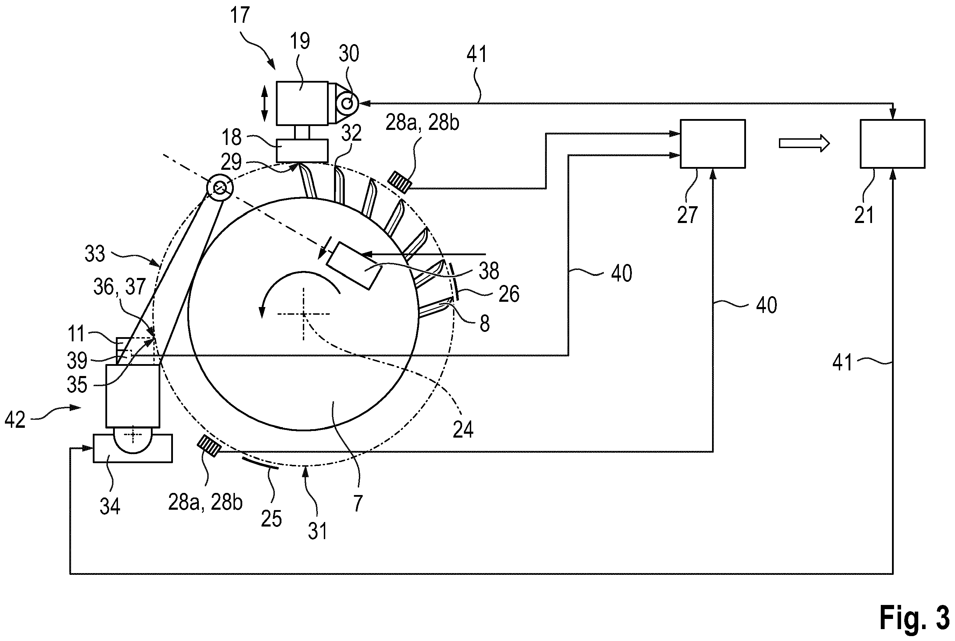

Die Darstellung in Fig. 3 zeigt eine Detailansicht der Häckseltrommel 7 mit einer Vorrichtung 42 zur Verstellung der Gegenschneide 11. Wie bereits weiter oben beschrieben, sind der Häckseltrommel 7 im Bereich des Trommelbodens 25 und/oder der Trommelrückwand 26 die Sensorvorrichtungen 28a, 28b zugeordnet, die den Verschleißzustand der Häckselmesser 8 ermitteln. In ihrem obenseitigen Bereich ist der Häckseltrommel 7 die Messerschleifeinrichtung 17 zugeordnet, wobei die Messerschleifeinrichtung 17 zumindest den Schleifstein 18, die den Schleifstein 18 aufnehmende Schleifsteinhalterung 19 und einen die Schleifsteinhalterung 19 parallel zur Drehachse 24 der Häckseltrommel 7 bewegenden Stellzylinder 30 umfasst. Der Schleifstein 18 wird in an sich bekannter Weise mittels der Schleifsteinhalterung 19 parallel zur Drehachse 24 geführt, dass diese in einer Nichtarbeitsposition seitlich der Häckseltrommel 7 positioniert ist und in der dargestellten Arbeitsposition entlang der von den Häckselmessern 8 bei Drehung der Häckseltrommel 7 aufgespannten Hüllkurve 31 geführt wird, sodass der Schleifstein 18 zumindest die Schleifflächenlänge eines jeweiligen Messerrückens 32 der Häckselmesser 8 überstreicht.

Die der Häckseltrommel 7 zugeordnete Gegenschneide 11 wird von einem Schwenkmechanismus 33 schwenkbeweglich in einer der Gegenschneide 11 untenseitig zugeordneten Lagerung 34 geführt, wobei der Schwenkmechanismus 33 Teil der Vorrichtung 42 zur Verstellung der Gegenschneide 11 ist. Eine der Häckseltrommel 7 zugewandte Kante 35 der Gegenschneide 11 ist in einem bestimmten Abstand 36 der Gegenschneide 11 zur Schneidkante 29, dem sogenannten Schneidspalt 37, von der Hüllkurve 31 der Häckseltrommel 7 entfernt positioniert. Weiter ist dem Schwenkmechanismus 33 in ebenfalls bekannter Weise zumindest ein Stellmotor 38 zugeordnet, der eine Positionsänderung der Gegenschneide 11 und damit eine Änderung des Schneidspaltes 37 ermöglicht. Der Stellmotor 38 ist ebenfalls Teil der Vorrichtung 42 zur Verstellung der Gegenschneide 11. Zudem nimmt die Gegenschneide 11 einen oder mehrere sogenannte Klopfsensoren 39 auf, die die Steuereinheit 21 in die Lage versetzen, den Abstand der Gegenschneide 11 zur Hüllkurve 31 der Häckseltrommel 7 mittels Schwingungsanalyse zu ermitteln, wobei die Klopfsensoren 39 ebenfalls Bestandteil der Vorrichtung 42 zur Verstellung der Gegenschneide 11 sind. Die Messerschleifeinrichtung 17 und die Komponenten 33, 34, 38, 39 der Vorrichtung 42 zur Verstellung der Gegenschneide 11 bilden zusammen eine Messerschleif- und Gegenschneideneinstellvorrichtung 43, die von der Steuereinheit 21 angesteuert wird.

Die Überwachungsvorrichtung 27 ist durch Signalleitungen 40 mit den Sensorvorrichtungen 28a, 28b sowie dem zumindest einen Klopfsensor 39 verbunden. Die Steuereinheit 21 ist durch Steuerleitungen 41 mit der Messerschleifeinrichtung 17 und dem Schwenkmechanismus 33 bidirektional verbunden, um an diese Steuerbefehle zu übermitteln sowie Betriebssignale von diesen zu empfangen.

Die Steuereinheit 21 ist dazu eingerichtet, die von der Überwachungsvorrichtung 27 bereitgestellten Informationen über einen Verschleißzustand der Häckselmesser 8 und den Abstand 36 der Gegenschneide 11 zur Schneidkante 29 auszuwerten. Das Ergebnis der Auswertung des Verschleißzustands der Häckselmesser 8 und des Abstands 36 der Gegenschneide 11 zur Schneidkante 29 wird mit einem Grenzwert für den einzuhaltenden Verschleißzustand und/oder den einzuhaltenden Abstand verglichen. Der Grenzwert bildet eine Untergrenze für einen durch die Messerschleif- und Gegenschneideneinstellvorrichtung 43 einzuhaltenden optimalen Bereich der momentanen Schneidschärfe der Häckselmesser 8 bzw. den Abstand 36 während des Ernteprozesses. Die Steuereinheit 21 ist dazu eingerichtet, bei einem Erreichen zumindest eines Grenzwertes automatisch eine Initialisierung eines Schleifvorganges und/oder einer Gegenschneidenverstellung durch die Messerschleif- und Gegenschneideneinstellvorrichtung 43 auszulösen, wobei die Durchführung des Schleifvorgangs und/oder der Gegenschneidenverstellung zur Adaption des Abstands 36 in den laufenden Arbeitsbetrieb des Feldhäckslers 1 integriert ist bzw. sind.

Die Messerschleif- und Gegenschneideneinstellvorrichtung 43 ist zur Durchführung des Schleifvorgangs und/oder der Gegenschneidenverstellung während einer, insbesondere jeder, Fahrt in einem Vorgewende und/oder bei einem, insbesondere jedem, Wechselvorgang eines den Feldhäcksler 1 während des laufenden Arbeitsbetriebes begleitenden Transport- oder Überladewagens eingerichtet. Hierzu ist die Steuereinheit 21 dazu eingerichtet, das Erreichen und Verlassen eines Vorgewendes oder die Durchführung eines Wechselvorganges eines Transport- oder Überladewagens während des Ernteprozesses zu bestimmen.

Dabei kann die sensorbasierte Überwachung des Überladevorganges auf den Transport- oder Überladewagen verwendet werden, um einen Wechselvorgang zu erkennen. Zur sensorbasierten Überwachung des Überladevorganges von Erntegut auf den Transport- oder Überladewagen kann beispielsweise eine am Auswurfkrümmer 15 angeordnete Kamera 44 vorgesehen sein. Die Kamera 44 kann dabei auch zur Detektion des Wechselvorganges eines Transport- oder Überladewagens verwendet werden. Indem die Auswertung der von der Kamera 44 bereitgestellten Bilder, welche durch die Steuereinheit 21 erfolgen kann oder durch ein mit der Steuereinheit 21 kommunizierendes Bildauswertungssystem, auf eine Unterbrechung des Überladevorgangs für einen Wechsel schließen lässt, kann diese Unterbrechung genutzt werden, um beispielsweise eine Gegenschneidenverstellung durchzuführen. Dabei sollte die Steuereinheit 21 dazu eingerichtet sein, anhand der Auswertung der Bilder unterscheiden zu können, zwischen einer Unterbrechung für einen Wechselvorgang, die einen Zeitraum umfasst, der die Durchführung beispielsweise einer Gegenschneidenverstellung ermöglicht, und einem annähernd unterbrechungsfreien Wechselvorgang, wenn ein weiterer Transport- oder Überladewagen den Feldhäcksler 1 bereits parallel begleitet, um den vollständig beladenen Transport- oder Überladewagen zu ersetzten. Ersteres kann beispielsweise anhand einer Durchsatzbestimmung in Verbindung mit der Bestimmung der aktuellen Fahrgeschwindigkeit erfolgen. Sinkt der Durchsatz auf den Wert Null und kommt der Feldhäcksler 1 zum Stillstand, während die übrigen Arbeitsaggregate, wie die Einzugs- und Vorpresswalzen 4 oder die Häckseleinrichtung 6 weiterhin angetrieben sind, kann die Steuereinheit 21 dies als eine Unterbrechung für einen Wechselvorgang interpretieren.

Das Erreichen und Verlassen eines Vorgewendes kann beispielsweise durch die jeweilige Detektion des Aushebens und Absenkens des Vorsatzgerätes 3 bestimmt werden. Ergänzend können ein Lenkeinschlag und/oder der Erntegutdurchsatz überwacht werden, um das Erreichen und Verlassen eines Vorgewendes zu bestimmen. Darüber hinaus kann der Feldhäcksler 1 ein Vorgewende-Managementsystem umfassen, welches Daten über das Erreichen und Verlassen von Vorgewenden eines zu bearbeitenden Schlages und die damit verbundene Dauer von Vorgewendefahrten bereitstellt. Die Verwendung des Vorgewende-Managementsystems geht mit der Nutzung eines Positionsortungssensors 45 eines globalen Positionsortungssystems wie GPS oder dergleichen einher.

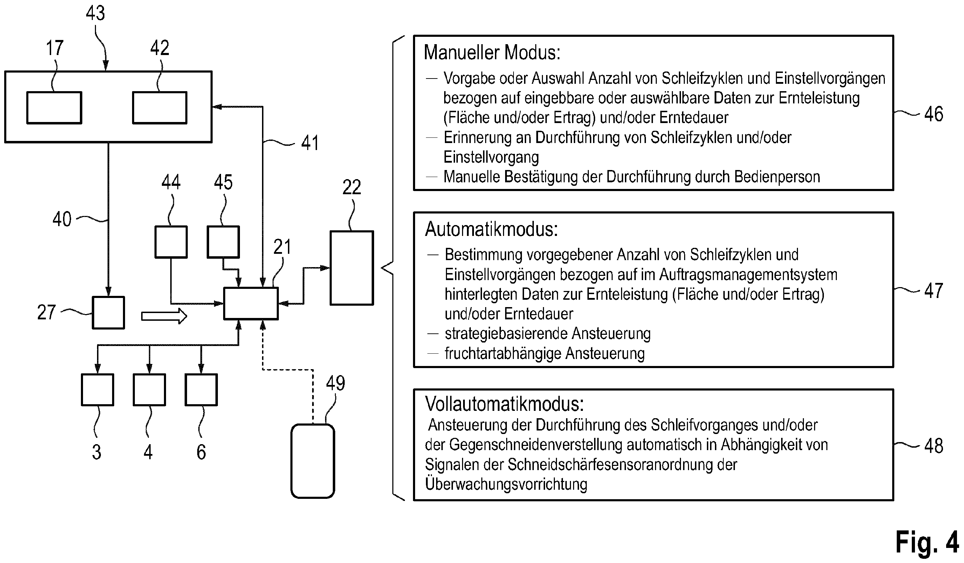

Fig. 4 zeigt ein vereinfachtes Funktionsschema des Zusammenwirkens von Steuereinheit 21, Überwachungsvorrichtung 27 und Messerschleif- und Gegenschneideneinstellvorrichtung 43. In Fig. 4 sind weiterhin drei Modi 46, 47, 48 dargestellt, welche mittels der Eingabe-Ausgabevorrichtung 22 zu ihrer Konfiguration und Aktivierung auswählbar sind.

In einer einfachen Ausgestaltung kann die Durchführung des Schleifvorganges und/oder der Gegenschneidenverstellung durch eine Bedienperson des Feldhäckslers 1 manuell zu bestätigen sein. Hierzu ist ein manueller Modus 46 vorgesehen, welcher Vorgaben bezüglich der Anzahl an durchzuführenden Schleifzyklen sowie Gegenschneidenverstellungen bezogen auf eingebbare oder auswählbare Daten zur Ernteleistung (Fläche und/oder Ertrag) und/oder Erntedauer erforderlich macht. Die Bedienperson kann selbsttätig jeweils einen Wert für die Anzahl an Schleifzyklen sowie Gegenschneidenverstellungen eingeben oder einen von der Steuereinheit 21 hierfür bereitgestellten Vorschlagswert auswählen.

Beispielsweise kann die Bedienerperson eine Anzahl von 3 Schleifzyklen bezogen auf eine zu bearbeitende Fläche von einem 1 ha sowie eine Anzahl von 1 Gegenschneidenverstellung bezogen auf eine zu bearbeitende Fläche von 10 ha mittels der Eingabe-Ausgabevorrichtung 22 einstellen bzw. auswählen. Zusätzlich bietet der manuelle Modus 46 der Bedienperson die Möglichkeit, die Initialisierung und Durchführung einer oder beider Vorgänge, das Nachschleifen und/oder die Gegenschneidenverstellung, zu unterbinden. Die Steuereinheit 21 überwacht die von der Bedienperson durch Eingabe oder Auswahl getätigten Vorgaben und ist dazu eingerichtet, bei Erreichen des oder der Vorgabewerte mittels der Eingabe-Ausgabevorrichtung 22 eine Erinnerung an die Durchführung des Nachschleifens und/oder der Gegenschneidenverstellung auszugeben. Die Bedienperson muss daraufhin aktiv die Durchführung des Nachschleifens und/oder der Gegenschneidenverstellung bestätigen. Die Steuereinheit 21 wiederum bestimmt daraufhin automatisch den nächstmöglichen Zeitpunkt zur Durchführung des Nachschleifens und/oder der Gegenschneidenverstellung im laufenden Arbeitsbetrieb des Feldhäckslers 1 und steuert diese dann an.

Ein Automatikmodus 47 erweitert den manuellen Modus 46 um die Möglichkeit, dass die Steuereinheit 21 dazu eingerichtet ist, die Bestimmung einer vorgegebenen Anzahl von Schleifzyklen und Einstellvorgängen bezogen auf in einem Auftragsmanagementsystem 49 hinterlegten Daten zur Ernteleistung (Fläche und/oder Ertrag) und/oder Erntedauer zu bestimmen. Hierzu kann die Steuereinheit 21 mit dem Auftragsmanagementsystem 49, welches in der Regel auf einem entfernten Datenverarbeitungssystem ausgeführt wird, kommunizieren, um von diesem die notwendigen Daten für die durch den Feldhäcksler 1 zu bearbeitende Fläche zu erhalten.

Weiterhin kann die im Automatikmodus 47 betriebene Steuereinheit 21 dazu eingerichtet sein, in Abhängigkeit von einer einzugebenden oder auszuwählenden Fruchtart und/oder einer Strategieauswahl die Messerschleif- und Gegenschneideneinstellvorrichtung 43 anzusteuern. Eine fruchtartabhängige Ansteuerung berücksichtigt die unterschiedlichen Einflüsse auf den Verschleiß der Häckselmesser 8 und/oder den Abstand der Gegenschneide 11 zur Schneidkante 29. Beispielsweise ist es bei der Ernte von Gras oder Ganzpflanzensilage sinnvoll, die Häckselmesser 8 häufiger nachzuschleifen, da diese durch die Aufnahme von Steinen und Sand einem höheren Verschleiß unterworfen sind, als bei anderen Fruchtarten wie Mais. Im Fall der Ernte von Mais ist es hingegen sinnvoll, den Abstand der Gegenschneide 11 zur Schneidkante 29 der Häckselmesser 8 im Verhältnis zum Nachschleifen häufiger zu adaptieren, da bei dieser Fruchtart der Selbstschärfeeffekt der Häckselmesser 8 im Gegensatz zur Verarbeitung von Gras ein häufiges Nachschleifen nicht erforderlich macht. Vielfach ist ein reines Adaptieren des Abstands 36 der Gegenschneide 11 ausreichend, wodurch der erforderliche Zeitraum zur Durchführung der Maßnahme erheblich verringert ist. Die Steuereinheit 21 kann auch hier entsprechende Daten bezüglich der Fruchtart und der damit verbundenen Strategieauswahl vom Auftragsmanagementsystem 49 empfangen.

Hingegen berücksichtigt eine strategiebasierende Ansteuerung der Messerschleif- und Gegenschneideneinstellvorrichtung 43 Zielvorgaben wie das Aufrechterhalten einer Häckselqualität oder das Aufrechterhalten der Schneidschärfe. Beispielsweise kann durch die Bedienperson eine Gegenschneideeinstellstrategie ausgewählt werden, welche für ein in Relation zur Anzahl der Schleifzyklen häufiges Einstellen der Gegenschneide sorgt. Hierbei ist die Anzahl der Einstellvorgänge unabhängig von der Anzahl der durchgeführten Schleifzyklen. Eine durch die Bedienperson auswählbare Schneidschärfestrategie kann eine häufigere Ausführung von Schleifzyklen vorsehen, um den Messerverschleiß zu kompensieren. Die Durchführung der Adaption der Gegenschneide 11 erfolgt dabei in Abhängigkeit von einer vorgebbaren oder auswählbaren Anzahl von auszuführenden Schleifzyklen.

Prinzipiell erlaubt der Automatikmodus 47 die Übersteuerung der durch die Steuereinheit 21 vorgesehenen Anzahl von Schleifzyklen und/oder Gegenschneidenverstellungen durch die Bedienperson.

Die im Vollautomatikmodus 48 betriebene Steuereinheit 21 ist dazu eingerichtet, die Durchführung des Schleifvorganges und/oder der Gegenschneidenverstellung automatisch in Abhängigkeit von Signalen der Schneidschärfesensoranordnung 28 der Überwachungsvorrichtung 27 vorzunehmen. Bei dieser vollautomatisierten Ausgestaltung kann die Steuereinheit 21 selbstständig die Anzahl und die Zeitpunkte bestimmen, zu welchen die in den laufenden Arbeitsbetrieb des Feldhäckslers 1 integrierte Durchführung des Schleifvorgangs und/oder der Gegenschneidenverstellung erfolgt. Der Vollautomatikmodus stellt eine Erweiterung des Automatikmodus 47 dar.

Die Eingabe-Ausgabevorrichtung 22 ermöglicht es der Bedienperson, den jeweiligen Modus 46, 47 oder 48 auszuwählen, in welchem die Steuereinheit 21, und damit verbunden die Messerschleif- und Gegenschneideneinstellvorrichtung 43, betrieben werden soll.

Ein weiteres Merkmal besteht darin, dass die Überwachungsvorrichtung 27 mittels der Klopfsensoren 39 zur Bestimmung des Abstands 36 der Gegenschneide 11 zur Schneidkante 29 eingerichtet ist, wobei die Überwachungsvorrichtung 27 Sensorsignale an die Steuereinheit 21 zur Auswertung überträgt. Die Steuereinheit 21 ist dazu eingerichtet, anhand der Sensorsignale der Klopfsensoren 39 das Auftreten von Vibrationen zu bestimmen, welche das Adaptieren des Abstands 36 der Gegenschneide 11 zur Schneidkante 29 zumindest beeinflussen. Die Steuereinheit 21 ist dazu eingerichtet ist, in Abhängigkeit von einem Schwellwert für die auftretenden Vibrationen die Fahrgeschwindigkeit und/oder die Antriebsdrehzahl eines Antriebsmotors des Feldhäckslers 1 während einer Vorgewendefahrt oder eines Wechselvorganges zu reduzieren, um die Vibrationen zumindest soweit zu reduzieren, dass eine Adaption des Abstand 36 der Gegenschneide 11 mit der notwendigen Genauigkeit möglich ist, um Beschädigungen der Häckselmesser 8 zu verhindern. Die Steuereinheit 21 ist weiter dazu eingerichtet, bei einer Unterbrechung des Vorgangs der Gegenschneidenverstellung aufgrund von zu starken Vibrationen, die mittels der Klopfsensoren 39 detektiert werden können, die Gegenschneide 11 in eine zu den Häckselmessern 8 signifikant beabstandete gesicherte Position zu überführen. Hierzu kann beispielsweise der einzustellende Abstand 36 um einen Wert von 0,2 mm oder mehr erhöht werden, um eine ausreichende Distanz zur Hüllkurve 31 einzustellen.

Die Steuereinheit 21 ist dazu eingerichtet, automatisch den Betrieb des Vorsatzgerätes 3 und/oder der Einzugsvorrichtung, d.h. der Einzugs- und Vorpresswalzen 4, und /oder der Häckseleinrichtung 6 des Feldhäckslers 1 vor der Durchführung eines Schleifvorganges und/oder einer Gegenschneidenverstellung für die Dauer der Durchführung zu unterbrechen. Das Unterbrechen des Betriebs des Vorsatzgerätes 3 sowie der Einzugs- und Vorpresswalzen 4 hat den Effekt, dass Vibrationen, die den Einstellvorgang der Gegenschneidenverstellung beeinflussen, reduziert werden. Ein weiterer Effekt besteht in einer Reduzierung des Schmutzeintrages in die Messerschleifeinrichtung 17. Des Weiteren wird ein leichteres Ausblasen oder die Rückführung von Schmutz aus der Messerschleifeinrichtung 17 ermöglicht.

**Bezugszeichenliste**

| | | | |
|---|---|---|---|
| 1 | Feldhäcksler | 30 | Stellzylinder |
| 2 | Einzugskanal | 31 | Hüllkurve |
| 3 | Erntevorsatz | 32 | Messerrücken |
| 4 | Einzugs- und Vorpresswalzen | 33 | Schwenkmechanismus |
| 5 | Erntegutstrom | 34 | Lagerung |
| 6 | Häckseleinrichtung | 35 | Kante |
| 7 | Häckseltrommel | 36 | Abstand |
| 8 | Häckselmesser | 37 | Schneidspalt |
| 9a | Häckselmesseranordnung | 38 | Stellmotor |
| 9b | Häckselmesseranordnung | 39 | Klopfsensor |
| 10 | Einzugsbereich | 40 | Signalleitung |
| 11 | Gegenschneide | 41 | Steuerleitung |
| 12 | Cracker | 42 | Vorrichtung |
| 13 | Nachzerkleinerungseinrichtung | 43 | Messerschleif- und Gegenschneideneinstellvorrichtung |
| | | | |
| 14 | Nachbeschleunigungseinrichtung | 44 | Kamera |
| 15 | Auswurfkrümmer | 45 | Positionsortungssensor |
| 16 | Auswurfklappe | 46 | Manueller Modus |
| 17 | Schleifvorrichtung | 47 | Automatikmodus |
| 18 | Schleifstein | 48 | Vollautomatikmodus |
| 19 | Schleifsteinhalterung | 49 | Auftragsmanagementsystem |
| 20 | Laufachse | | |
| 21 | Steuereinheit | | |
| 22 | Eingabe-Ausgabevorrichtung | | |
| 23 | Kabine | | |
| 24 | Drehachse | | |
| 25 | Trommelboden | | |
| 26 | Trommelrückwand | | |
| 27 | Überwachungsvorrichtung | | |
| 28 | Schneidschärfesensoranordnung | | |
| 28a | Sensorvorrichtung | | |
| 28b | Sensorvorrichtung | | |
| 29 | Schneidkante | | |

## Patentansprüche

1. Selbstfahrender Feldhäcksler (1), umfassend eine Messerschleif- und Gegenschneideneinstellvorrichtung (43), die dazu eingerichtet ist, auf einer Häckseltrommel (7) einer Häckseleinrichtung (6) angeordnete Häckselmesser (8) nachzuschleifen sowie einen Abstand (36) einer der Häckseltrommel (7) zugeordneten Gegenschneide (11) zur Schneidkante (29) der Häckselmesser (8) einzustellen und zu adaptieren, sowie zumindest eine Überwachungsvorrichtung (27), die dazu eingerichtet ist, zyklisch Daten zu generieren, die Informationen über den Verschleißzustand der Häckselmesser (8) und/oder den Abstand (36) der Gegenschneide (11) zur Schneidkante (29) enthalten, **dadurch gekennzeichnet, dass** der Feldhäcksler (1) eine Steuereinheit (21) umfasst, welche dazu eingerichtet ist, die von der Überwachungsvorrichtung (27) bereitgestellten Informationen über den Verschleißzustand der Häckselmesser (8) und den Abstand (36) der Gegenschneide (11) zur Schneidkante (29) auszuwerten, mit einem Grenzwert für den Verschleißzustand und/oder den Abstand (36) zu vergleichen, wobei der Grenzwert eine Untergrenze für einen durch die Messerschleif- und Gegenschneideneinstellvorrichtung (43) einzuhaltenden optimalen Bereich der momentanen Schneidschärfe der Häckselmesser (8) bzw. des Abstands (36) während des Ernteprozesses bildet, und bei einem Erreichen zumindest eines Grenzwertes automatisch eine Initialisierung eines Schleifvorganges und/oder einer Gegenschneidenverstellung durch die Messerschleif- und Gegenschneideneinstellvorrichtung (43) auszulösen, wobei die Durchführung des Schleifvorgangs und/oder der Gegenschneidenverstellung in den laufenden Arbeitsbetrieb des Feldhäckslers (1) integriert ist.

2. Selbstfahrender Feldhäcksler (1) nach Anspruch 1, **dadurch gekennzeichnet, dass** die Messerschleif- und Gegenschneideneinstellvorrichtung (43) zur Durchführung des Schleifvorgangs und/oder der Gegenschneidenverstellung während einer, insbesondere jeder, Fahrt im Vorgewende und/oder bei Durchführung eines, insbesondere jeden, Wechselvorgangs eines den Feldhäcksler (1) während des laufenden Arbeitsbetriebes begleitenden Transport- oder Überladewagens eingerichtet ist.

3. Selbstfahrender Feldhäcksler (1) nach Anspruch 2, **dadurch gekennzeichnet, dass** die Steuereinheit (21) dazu eingerichtet ist, das Erreichen und Verlassen eines Vorgewendes oder die Durchführung eines Wechselvorganges eines Transport- oder Überladewagens während des Ernteprozesses zu bestimmen.

4. Selbstfahrender Feldhäcksler (1) nach einem der Ansprüche 1 bis 3, **dadurch gekennzeichnet, dass** die Steuereinheit (21) zur Eingabe und/oder Auswahl von Parametern der Messerschleif- und Gegenschneideneinstellvorrichtung (43) eingerichtet ist, wobei die Parameter eine Anzahl von auszuführenden Schleifzyklen sowie eine Häufigkeit der Gegenschneidenverstellung sind.

5. Selbstfahrender Feldhäcksler (1) nach einem der Ansprüche 1 bis 4, **dadurch gekennzeichnet, dass** die Steuereinheit (21) dazu eingerichtet ist, in Abhängigkeit von einer einzugebenden oder auszuwählenden Fruchtart und/oder einer Strategieauswahl die Messerschleif- und Gegenschneideneinstellvorrichtung (43) anzusteuern.

6. Selbstfahrender Feldhäcksler (1) nach einem der vorangehenden Ansprüche, **dadurch gekennzeichnet, dass** die Steuereinheit (21) dazu eingerichtet ist, die Fahrtdauer einer Vorgewendefahrt zu bestimmen, um in Abhängigkeit von der bestimmten Fahrtdauer eine mögliche Anzahl von Schleifzyklen zu bestimmen.

7. Selbstfahrender Feldhäcksler (1) nach einem der vorangehenden Ansprüche, **dadurch gekennzeichnet, dass** die Überwachungsvorrichtung (27) Sensoren (39) zur Bestimmung des Abstands (36) der Gegenschneide (11) zur Schneidkante (29) umfasst, wobei die Überwachungsvorrichtung (27) Sensorsignale an die Steuereinheit (21) zur Auswertung überträgt, wobei die Steuereinheit (21) dazu eingerichtet ist, anhand der Sensorsignale das Auftreten von Vibrationen zu bestimmen, welche das Adaptieren des Abstands (36) der Gegenschneide (11) zur Schneidkante (29) zumindest beeinflussen.

8. Selbstfahrender Feldhäcksler (1) nach Anspruch 7, **dadurch gekennzeichnet, dass** die Steuereinheit (21) dazu eingerichtet ist, in Abhängigkeit von einem Schwellwert für die auftretenden Vibrationen die Fahrgeschwindigkeit und/oder die Antriebsdrehzahl eines Antriebsmotors des Feldhäckslers (1) während einer Vorgewendefahrt oder eines Wechselvorganges zu reduzieren.

9. Selbstfahrender Feldhäcksler (1) nach einem der vorangehenden Ansprüche, **dadurch gekennzeichnet, dass** die Steuereinheit (21) dazu eingerichtet ist, den Betrieb eines Vorsatzgerätes (3) und/oder einer Einzugsvorrichtung (4) und/oder der Häckseleinrichtung (6) des Feldhäckslers (1) vor der Durchführung eines Schleifvorganges und/oder einer Gegenschneidenverstellung für die Dauer der Durchführung zu unterbrechen.

10. Selbstfahrender Feldhäcksler (1) nach einem der vorangehenden Ansprüche, **dadurch gekennzeichnet, dass** die Durchführung des Schleifvorganges und/oder der Gegenschneidenverstellung durch eine Bedienperson des Feldhäckslers (1) manuell zu bestätigen ist.

11. Selbstfahrender Feldhäcksler (1) nach einem der vorangehenden Ansprüche, **dadurch gekennzeichnet, dass** die Steuereinheit (21) eine Eingabe-Ausgabevorrichtung (22) umfasst, die zur Eingabe und/oder Vorgabe der Anzahl von Schleifzyklen und Einstellvorgängen der Gegenschneide bezogen auf in einem Auftragsmanagementsystem (49) hinterlegten Daten zur Ernteleistung und/oder Erntedauer eingerichtet ist.

12. Selbstfahrender Feldhäcksler (1) nach einem der vorangehenden Ansprüche, **dadurch gekennzeichnet, dass** die Steuereinheit (21) dazu eingerichtet ist, die Durchführung des Schleifvorganges und/oder der Gegenschneidenverstellung automatisch in Abhängigkeit von Signalen einer Schneidschärfesensoranordnung (28) der Überwachungsvorrichtung (27) vorzunehmen.

13. Verfahren zum Betreiben eines selbstfahrenden Feldhäckslers (1) nach einem der vorangehenden Ansprüche, **gekennzeichnet durch** die Verfahrensschritte:
- Auswerten von Informationen über den Verschleißzustand der Häckselmesser (8) und den Abstand (36) der Gegenschneide (11) zur Schneidkante (29),
- Vergleichen der ausgewerteten Informationen mit einem Grenzwert für den Verschleißzustand und/oder den Abstand (36), wobei der Grenzwert eine Untergrenze für einen durch die Messerschleif- und Gegenschneideneinstellvorrichtung (43) einzuhaltenden optimalen Bereich der momentanen Schneidschärfe der Häckselmesser (8) bzw. des Abstands (36) während des Ernteprozesses bildet, und
- Auslösen einer Initialisierung eines Schleifvorganges und/oder einer Gegenschneidenverstellung durch die Messerschleif- und Gegenschneideneinstellvorrichtung (43) bei einem Erreichen des Grenzwertes, wobei die Durchführung des Schleifvorgangs und/oder der Gegenschneidenverstellung in den laufenden Arbeitsbetrieb des Feldhäckslers (1) integriert wird.

14. Verfahren nach Anspruch 13, **dadurch gekennzeichnet, dass** die Durchführung des Schleifvorgangs und/oder der Gegenschneidenverstellung während einer, insbesondere jeder, Fahrt im Vorgewende und/oder bei einem, insbesondere jedem, Wechselvorgang eines den Feldhäcksler (1) während des laufenden Arbeitsbetriebes begleitenden Transport- oder Überladewagens durch die Messerschleif- und Gegenschneideneinstellvorrichtung (43) durchgeführt wird.

15. Verfahren nach Anspruch 13 oder 14, **dadurch gekennzeichnet, dass** die Durchführung des Schleifvorgangs und/oder der Gegenschneidenverstellung manuell durch eine Bedienperson, in Abhängigkeit von in einem Auftragsmanagementsystem (49) hinterlegten Daten zur Ernteleistung und/oder Erntedauer oder vollautomatisch in Abhängigkeit von Signalen einer Schneidschärfesensoranordnung (28) der Überwachungsvorrichtung (27) ausgelöst wird.
